# EUROPEAN PATENT APPLICATION

(11) **EP 4 036 550 A1**
(43) Date of publication of application: **03.08.2022**
(21) Application number: 20868678.2
(22) Date of filing: 31.07.2020
(51) Int. Cl.: G01M 15/02, C01F 17/00, F02B 77/00, F02F 7/00, F16C 33/12, F16C 33/20

(54) **SLIDING MEMBER OF INTERNAL COMBUSTION ENGINE INCLUDING SELF-DETECTING MATERIAL FOR MONITORING SLIDING MEMBER DAMAGE**

(30) Priority: 27.09.2019 JP 2019176710
(71) Applicant: Daido Metal Company Ltd., Nagoya-shi, Aichi 460-0008 (JP)
(72) Inventor: HAYASHI, Masaki, Inuyama-shi, Aichi 484-00061 (JP); KATO, Kenta, Inuyama-shi, Aichi 484-0061 (JP); BAJWA, Rizwan, Somerset, TA19 9PH (GB); ZHANG, Yi, Somerset, TA19 9PH (GB)
(74) Representative: Beckmann, Claus
(86) International application number: PCT/JP2020/029394
(87) International publication number: WO 2021/059743

(57) **Abstract**

Provided is a sliding member of an internal combustion engine including a self-detecting material for highly reliable and easy monitoring of damage to the sliding member. A sliding member of an internal combustion engine including a self-detecting material for monitoring damage to the sliding member, wherein the sliding member has a single-layer or multi-layer structure made of a metal, an alloy, and/or a resin material, the self-detecting material is embedded in at least one of the layers constituting the sliding member, and the self-detecting material is configured of at least one kind of material that exhibits a signal characteristic in response to external energy.

## Description

### TECHNICAL FIELD

The present invention relates to a sliding member of an internal combustion engine including a self-detecting material for monitoring sliding member damage.

### BACKGROUND ART

Patent Literature 1 and Patent Literature 2 disclose a bearing diagnosis apparatus for a rotatable bearing application and a detection method using an AE sensor. Patent Literature 3 and Patent Literature 4 disclose a bearing wear monitoring system for a sliding bearing and a detection method using an RFID sensor. Moreover, Patent Literature 5 discloses a damage detection method for a slide bearing, in which an electric signal generated by special particles is monitored by a detector installed on a lubricating oil passage.

A conventional sensor technique requires a complicated manufacturing process, additional software for observation, a mass data storage, and highly skilled engineers during production and data observation. Thus, the application of conventional sensor technology is limited.

Furthermore, signal detection may be seriously affected by extraneous disturbance factors (e.g., component noise, foreign matters in lubricating oil, and contamination). This makes it difficult to achieve correct and reliable monitoring.

The observation data of AE sensors used in Patent Literature 1 and Patent Literature 2 may be seriously affected by an actual engine environment (including vibrations, a temperature change, and integration into a sliding member of a complicated multi-layer structure).

RFID sensors used in Patent Literature 3 and Patent Literature 4 are integrated into sliding surface treatment (overlay) on a sliding member. However, the RFID sensors are inevitably manufactured at low temperatures due to the properties of the RFID sensors. Moreover, the sensors typically measure several tens µm and thus it is quite difficult or impossible to integrate the sensors into thin sliding surface treatment.

In Patent Literature 5, dielectric particles contained in a bearing material are detected by a capacitance sensor installed on a drain oil passage. Specifically, when damage occurs on a bearing metal, drain oil contains fine particles having relative dielectric constants different from that of the damaged piece of the bearing metal, thereby changing an electric field between the electrodes of the capacitance sensor installed on the drain oil passage. The presence of the fine particles is detected by the change of the electric field. Unfortunately, it is difficult to make a correct and reliable measurement in this method for the following reasons:

A measurement with a capacitance sensor is highly sensitive to the amount of waste passing through an oil passage. An oil quantity, an oil temperature, an oil density, oil deterioration, and oil filter performance may change measurement data. This cannot perform correct and innovative monitoring.

Since lubricating oil and dielectric particles have relative dielectric constants close to each other, the detection method using a capacitance sensor cannot discriminate between lubricating oil and dielectric particles. Moreover, if the dielectric particles are contained in foreign metallic particles, the presence or absence of the dielectric particles in the foreign metallic particles cannot be determined, so that the dielectric particles cannot be sufficiently detected. Furthermore, water sprayed into oil may generate an electrostatic pulse that may interfere with the detection of dielectric particles, like foreign metallic particles. This cannot perform correct and reliable monitoring.

Moreover, in the method using a capacitance sensor, the sensor is assembled into the pipe of the drain oil passage and maintenance is thus required at regular intervals. Otherwise it is likely that the sensor will deteriorate and the accuracy of signal detection will considerably decrease. Since the sensor is assembled into a complicated engine-oil lubricating device, the maintenance may become costly.

### CITATION LIST

### PATENT LITERATURES

Patent Literature 1: EP-A-3054292
Patent Literature 2: U.S. Patent No. 4884449
Patent Literature 3: U.S. Patent Application Publication No. 2016/0208849
Patent Literature 4: WO 2017/174167
Patent Literature 5: JP-A-59-205022

### SUMMARY OF INVENTION

### TECHNICAL PROBLEM

An object of the present invention is to provide a sliding member of an internal combustion engine including a self-detecting material for monitoring sliding member damage.

### SOLUTIONS TO PROBLEM

In order to solve the problem, the present invention provides a sliding member of an internal combustion engine including self-detecting materials for monitoring sliding member damage, wherein
the sliding member has a single-layer or multi-layer structure made of a metal, an alloy, and/or a resin material,
the self-detecting material is embedded in at least one of layers constituting the sliding member, and
the self-detecting material is configured of at least one kind of material that exhibits a signal characteristic in response to external energy.

According to another embodiment of the present invention, the self-detecting material is particles measuring 0.1 µm to 100 µm.

According to another embodiment of the present invention, the self-detecting material is particles measuring 0.2 µm to 10 µm.

According to another embodiment of the present invention, the self-detecting material of 50 vol% or less is contained in the at least one layer of the sliding member including the embedded self-detecting material.

According to another embodiment of the present invention, in the sliding member, the layers having different depths contain the respective self-detecting materials that exhibit different signal characteristics.

According to another embodiment of the present invention, the self-detecting materials exhibit the signal characteristics having noticeable visual characteristics in response to the external energy.

According to another aspect of the present invention, in a sliding device including a plurality of the sliding members, the plurality of sliding members contain the respective self-detecting materials that exhibit different signal characteristics.

Another aspect of the present invention is an internal combustion engine including the sliding member or the sliding device.

According to another aspect of the present invention, a method for monitoring sliding member damage, including the steps of:
providing the sliding member, the sliding device, or the internal combustion engine;
collecting a sample from a lubricating oil system of the internal combustion engine;
applying the external energy to the sample; and
detecting the self-detecting material in the sample.

### BRIEF DESCRIPTION OF DRAWINGS

[FIG. 1] FIG. 1 is a schematic diagram of an assembly including sliding members according to an embodiment of the present invention.
[FIG. 2] FIG. 2 is a schematic diagram illustrating a specific example of a wear-volume monitoring system for the sliding member according to the embodiment of the present invention.

### DESCRIPTION OF EMBODIMENT

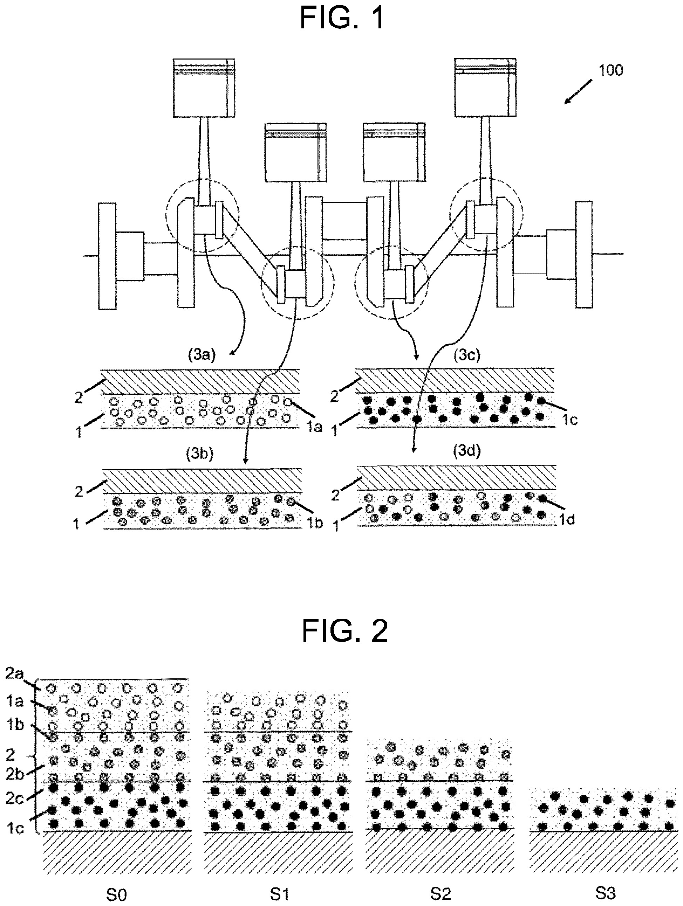

FIG. 1 illustrates a schematic diagram of an assembly 100 including sliding members according to an embodiment of the present invention. The assembly 100 is, for example, a sliding device including a crankshaft of an internal combustion engine. FIG. 1 illustrates four different sliding members 3a to 3d. The sliding members include self-detecting materials 1a to 1d, respectively. The self-detecting materials 1a to 1d are provided for monitoring damage to the sliding members. The sliding members each have a single-layer or multi-layer structure made of a metal, an alloy, and/or a resin material. The self-detecting materials 1a to 1d are particulate in the present embodiment and are embedded in at least one of layers (a lower layer 1 in the present example) constituting the sliding members. The self-detecting material is configured of at least one kind of material that exhibits a signal characteristic in response to external energy. In the present example, the self-detecting materials 1a to 1d that generate different signals are included in the respective sliding members. In other words, the self-detecting materials 1a to 1d exhibit different colors during signal detection. When an upper layer 2 is worn out and the lower layer 1 starts wearing, the self-detecting materials 1a to 1d are detected in lubricating oil. The damaged sliding members can be identified by the signal colors of the self-detecting materials 1a to 1d.

An example of a measuring method will be described below.

### 1. Sample collection

A sample for signal detection is collected in a liquid state or an oil-sludge state during an engine operation or repair. For example, in a liquid state, the sample is collected from an oil supply valve in a lubricating-oil supply system. For example, in a sludge state, the sample is collected from an oil filter. The oil sample or the oil sludge sample is collected at regular time intervals or in a specific operation time.

### 2. Sample preparation

In the case of the oil sample, the oil sample is poured into a transparent bottle and is centrifuged at 3000 rpm to 5000 rpm. The centrifugal separation is desirably performed at 5000 rpm for ten minutes. Thus, contents (including the self-detecting materials) in the oil sample are completely precipitated at the bottom of the bottle.

In the case of the oil sludge sample, the sample is physically crushed into powder. Thereafter, the powder oil sludge sample is distributed onto a black sheet of paper serving as a background. The distribution thickness is desirably 1 mm to 2 mm.

### 3. Signal detection

For signal detection, a hand-held illumination source is used. A lighting device requires an output of 50 W or more, desirably 100 W or more. The sample is illuminated for five to ten minutes (desirably ten minutes). The self-detecting materials in the oil sample or the sludge sample retain high excitation energy, thereby emitting light in various colors. The light is emitted by generating a specific wavelength (color) in response to excitation energy from an illumination source with a specific wavelength.

According to the measuring method, a measurement can be conducted in an environment completely separated from an engine system, enabling a correct and reliable measurement without being affected by various disturbances (including engine noise, vibrations, and a temperature change).

The present invention enables continuous monitoring of a state of the sliding member. In this case, continuous monitoring means continuous tracking study that can be conducted on the wear volume of the sliding member by collecting and analyzing a sample, for example, every 5000 hours. Moreover, the present invention can detect wear of some different sliding members in the engine system.

The self-detecting materials are, for example, particles that exhibit specific signal characteristics in response to specific external stimuli. The specific external stimuli include but not limited to an electric field, a magnetic field, an electromagnetic wave, an ultrasonic wave, and particularly an ultraviolet ray. The specific signal characteristics mean, for example, at least one luminescent color. The light emission has noticeable visual characteristics. The noticeable visual characteristics mean visually noticeable characteristics. A representative example of a commercially available self-detecting material that emits light due to ultraviolet excitation will be described below.
Particle type 1(1a); Al₂SrO₄: RE (yellow green)
Particle type 2(1b); BaMg₂Al₁₆O₂₇: RE (blue)
Particle type 3(1c); Y₂O₃: RE (red)
Particle type 4(1d); Gd₂O₂S: RE (green)
Particle type 5(1e); Y₃Al₅O₁₂: RE (yellow)
where RE indicates rare-earth elements.

The self-detecting materials are preferably particles measuring 0.1 µm to 100 µm. This is because particles smaller than 0.1 µm are hard to detect while particles larger than 100 µm may deteriorate the mechanical characteristics of the sliding members.

In consideration of the accuracy of detection, the lower limit side of the particle size is desirably set at 0.2 µm. Moreover, in consideration of the mechanical characteristics of the sliding members, the upper limit side of the particle size is desirably set at 10 µm. If a self-detecting material larger than 10 µm is particularly applied to an overlay layer that is typically several to several tens µm in thickness, an internal stress may reduce the material performance.

In this case, the particle size is measured in the longitudinal direction of a particle having any particle shape. The particle size can be measured by a device generally known in the technical field.

### Shimadzu Corporation, Laser Diffraction Particle Size Analyzer (SALD-2300)

### Malvern Panalytical, Device lineup

Moreover, the self-detecting material of 50 vol% or less is preferably contained in the layer of the sliding member including the embedded self-detecting material. In this case, the layer of the sliding member is, for example, the bearing alloy layer of a bearing, an intermediate layer, or an overlay layer.

If the content of the self-detecting material is larger than 50 vol% on the upper limit side, typically, the original bearing performance may be hardly provided. On the lower limit side, the light emission of at least one particle (vol% substantially equal to 0) in the sample enables visual determination (for example, luminescent particles can be found in an oil sludge sample). In view of the visibility of light emission, the content is preferably 0.5 vol% or more.

Regarding the term "self-detecting material," "self" also means the acquisition of signal characteristics only with quite simple steps (in the present example, an ultraviolet light serves as an illumination source). This term is similar to, for example, the term "self-repairing material" (a material repaired by external influence (e.g., a temperature change)) that is used for a phenomenon including simple external influence as well as a purely self-contained phenomenon. The expression "self" is used in contrast to a conventional detection material that does not change the appearance and requires a complicated mechanism, for example, a sensor.

Furthermore, the sliding member has a single-layer structure or a multi-layer structure and is obtained by stacking an overlay layer or the like on various kinds of base layers. The base layer includes, but not limited to, base layers of bronze, brass, white metal (Babbitt metal), an aluminum alloy, steel, and other base layers. The self-detecting materials can be optionally contained in the overlay layer and other layers according to, for example, the application purpose of the sliding member.

The sliding member can be produced by the following material production methods: sintering, casting, pressure welding, vacuum sputtering, hot and cold spraying, baking, mold plating, electroplating, or a combination thereof. The material production method is not limited thereto.

FIG. 2 is a schematic diagram illustrating a specific example of wear volume monitoring for the sliding member according to the embodiment of the present invention. In the present example, the sliding member is formed by three layers 2a to 2c in an initial stage 0 (S0). For example, the three layers are set to have the same thickness. The three layers 2a to 2c having different depths contain self-detecting materials 1a to 1c, respectively. The self-detecting materials 1a to 1c exhibit different signal characteristics. In a stage 1 (S1), the layer 2a containing the embedded self-detecting material 1a starts wearing. In a stage 2 (S2), the layer 2a has been completely worn out, and the layer 2b containing the self-detecting material 1b is exposed. In response to the detection of the self-detecting material 1b from an oil sample or an oil sludge sample, a wear monitoring system issues, as an initial alarm, an alarm about the sliding member worn by one third of the thickness of the sliding member in a local area. Likewise, in a stage 3 (S3), if the self-detecting material 1c included in the lower layer 2c is detected, the wear monitoring system issues, as a final alarm, an alarm about the sliding member worn by two thirds of the thickness of the sliding member in a local area. The number of layers of the sliding member and the thickness (ratio) of each layer of the sliding member can be set as appropriate. The present invention can predict the life of the sliding member.

The present invention acquires advantages over the related art as follows:
A measurement can be conducted on-site without additional software or a mass data storage for continuous recording/storage. Moreover, high-level training for a measurer is not necessary.

Assembly into a current production process can be performed without new facilities and steps, easily ensuring compatibility with the current production process.

This detection monitoring method achieves accuracy and reliability without being affected by engine noise, foreign metallic particles, lubricating oil contamination, vibrations, and a temperature change or the like.

The self-detecting materials can be assembled into the sliding member without changing a bearing design or providing an additional sensor. Furthermore, this method does not need additional maintenance associated with the assembly, achieving high cost performance.

The sliding members of the internal combustion engine including the self-detecting materials described in the present invention include, but not limited to, a crankshaft, a camshaft, a bearing, a bush, a thrust washer, and piston components (a piston ring, the sliding surface of a cylinder liner).

### REFERENCE SIGNS LIST

- 1: Lower layer
- 1a to 1d: Self-detecting material
- 2: Upper layer
- 2a to 2c: Sliding layer
- 3a to 3c: Sliding member
- 100: Assembly

## Claims

1. A sliding member of an internal combustion engine including self-detecting materials for monitoring sliding member damage, wherein
the sliding member has a single-layer or multi-layer structure made of a metal, an alloy, and/or a resin material,
the self-detecting material is embedded in at least one of layers constituting the sliding member, and
the self-detecting material is configured of at least one kind of material that exhibits a signal characteristic in response to external energy.

2. The sliding member according to claim 1, wherein the self-detecting material is particles measuring 0.1 µm to 100 µm.

3. The sliding member according to claim 1, wherein the self-detecting material is particles measuring 0.2 µm to 10 µm.

4. The sliding member according to any one of claims 1 to 3, wherein the self-detecting material of 50 vol% or less is contained in the at least one layer of the sliding member including the embedded self-detecting material.

5. The sliding member according to any one of claims 1 to 4, wherein in the sliding member, the layers having different depths contain the respective self-detecting materials that exhibit different signal characteristics.

6. The sliding member according to any one of claims 1 to 5, wherein the self-detecting materials exhibit the signal characteristics having noticeable visual characteristics in response to the external energy.

7. A sliding device comprising a plurality of the sliding members according to any one of claims 1 to 6, wherein the plurality of sliding members contain the respective self-detecting materials that exhibit different signal characteristics.

8. An internal combustion engine comprising the sliding member according to any one of claims 1 to 6 or the sliding device according to claim 7.

9. A method for monitoring sliding member damage, comprising the steps of:
providing the sliding member according to any one of claims 1 to 6, the sliding device according to claim 7, or the internal combustion engine according to claim 8;
collecting a sample from a lubricating oil system of the internal combustion engine;
applying the external energy to the sample; and
detecting the self-detecting materials in the sample.
